# EUROPEAN PATENT SPECIFICATION

(11) **EP 4 231 772 B1**
(45) Date of publication and mention of the grant of the patent: **18.06.2025**
(21) Application number: 23157438.5
(22) Date of filing: 20.02.2023
(51) Int. Cl.: H04W 76/28, H04W 72/00, H04W 74/00, H04L 5/00, H04W 56/00

(54) **ENHANCED PRIMARY SECONDARY CELL ACTIVATION DELAY**
VERBESSERTE AKTIVIERUNGSVERZÖGERUNG FÜR PRIMÄRE SEKUNDÄRZELLEN
RETARD AMÉLIORÉ D'ACTIVATION DE CELLULE SECONDAIRE PRIMAIRE

(30) Priority: 22.02.2022 US 202263312675 P
(43) Date of publication of application: 23.08.2023
(73) Proprietor: Nokia Technologies Oy, 02610 Espoo (FI)
(72) Inventor: DALSGAARD, Lars, Oulu (FI); TURTINEN, Samuli Heikki, Ii (FI)
(74) Representative: Laine IP Oy

(56) References cited:
- VIVO: "Activation of a deactivated SCG", vol. RAN WG2, no. electronic; 20220117 - 20220125, 11 January 2022 (2022-01-11), XP052094494, Retrieved from the Internet <URL:https://ftp.3gpp.org/tsg_ran/WG2_RL2/TSGR2_116bis-e/Docs/R2-2201393.zip R2-2201393_Activation of a deactivated SCG.docx> [retrieved on 20220111]
- HUAWEI ET AL: "Discussion on efficient activation/de-activation mechanism for one SCG", vol. RAN WG4, no. Electronic Meeting; 20220221 - 20220303, 14 February 2022 (2022-02-14), XP052112133, Retrieved from the Internet <URL:https://ftp.3gpp.org/tsg_ran/WG4_Radio/TSGR4_102-e/Docs/R4-2204898.zip R4-2204898.doc> [retrieved on 20220214]
- "3rd Generation Partnership Project; Technical Specification Group Radio Access Network; NR; Requirements for support of radio resource management (Release 17)", vol. RAN WG4, no. V17.4.0, 11 January 2022 (2022-01-11), pages 68 - 549, XP052118536, Retrieved from the Internet <URL:https://ftp.3gpp.org/Specs/archive/38_series/38.133/38133-h40.zip 38133-h40_s0-11.docx> [retrieved on 20220111]

## Description

### RELATED APPLICATION:

This application claims priority to US Provisional Application No. 63/312675 filed February 22, 2022 **.**

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for enhanced primary secondary cell (PSCell) activation delay.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT). VIVO: "Activation of a deactivated SCG", 3GPP DRAFT; R2-2201393, forms part of the relevant prior art.

### SUMMARY:

The invention is carried out according to the appended independent claims. Optional features of the invention are carried out according to the dependent claims.

### BRIEF DESCRIPTION OF THE DRAWINGS:

For proper understanding of example embodiments, reference should be made to the accompanying drawings, wherein:
FIG. 1 illustrates an example of downlink (DL) scheduling for an activated cell.
FIG. 2 illustrates an example of a DL scheduling operation.
FIG. 3 illustrates an example signal flow of a DL scheduling operation, according to certain example embodiments.
FIG. 4 illustrates an example flow diagram of a method, according to certain example embodiments.
FIG. 5 illustrates an example flow diagram of another method, according to certain example embodiments.
FIG. 6 illustrates a set of apparatuses, according to certain example embodiments. In the following, fig. 4-5 and their description is according to the claimed invention. The remaining description does not or does not fully correspond to the claimed invention but is useful for understanding the invention.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for enhanced primary secondary cell (PSCell) activation delay.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

3^{rd} Generation Partnership Project (3GPP) describes deactivated secondary cell group (SCG) and deactivated PSCell. Until recently, the PSCell has been activated when configured, and it has not been possible to have a deactivated PSCell. Rather, only the secondary cells (SCells) could be deactivated. However, 3GPP has now defined that a PSCell (and SCG) can be deactivated. This means that 3GPP also needs to define UE activation and deactivation delay requirements for a PSCell.

When a PSCell is deactivated, a timing advance timer (TAT) may be kept running. Thus, a user equipment (UE) uplink (UL) timing may be considered valid until the TAT expires. When the UE has valid UL timing, the UE may be allowed to transmit other than random access (RA) preambles upon activation (initial step of the RA procedure) towards the gNB. For instance, dynamic grants scheduled by the network (or gNB, which may perform the scheduling) may be utilized, and scheduling request or grant resources may be configured. Otherwise, the UE may just be allowed to access the network using the RA procedure.

To enable UE scheduling in connected mode, the UE and the network may have a well synchronized understanding of when the UE will be listening to the downlink (DL) physical downlink control channel (PDCCH) for scheduling from the network. Additionally, the UE may access the network and request network resources either by sending a scheduling request (SR), if the UE has a valid UL timing alignment, or via using the RA procedure (initiated by sending a preamble), if the UE does not have a valid UL timing alignment.

When a PSCell is deactivated, the UE may not be required to listen for DL schedulings in the PSCell (and many other activities the UE may otherwise need to perform when the PSCell is activated). The UE may still perform a number of procedures on a deactivated PSCell such as performing L3 radio resource management (RRM) measurements. Additionally, the UE may be configured to perform radio link monitoring (RLM) and beam failure detection (BFD) on the PSCell. The UE may also be configured to report L3 measurements to the network (on the PCell) as well as report to the network if the UE detected a link failure (either cell (RLF) or beam BF)).

Once the network determines a need, the network may activate the PSCell. As an example of a need for activating the PSCell, the PSCell may be used for scheduling of data (e.g., either to boost the data throughput (TP) by increasing the UE operating bandwidth (BW), or for offloading the PCell.

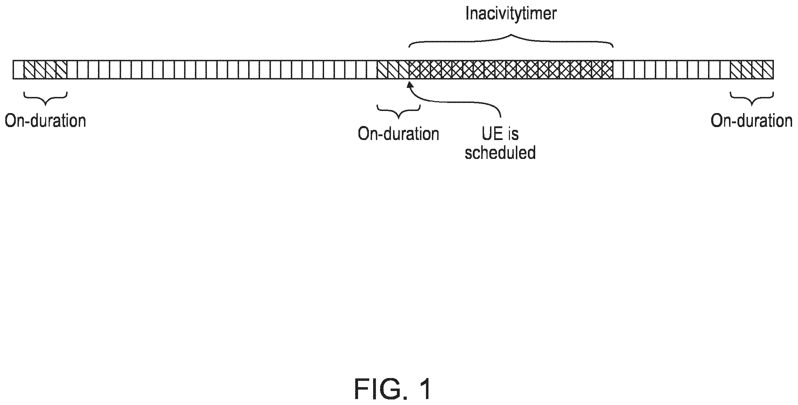

FIG. 1 illustrates an example of DL scheduling for an activated cell. As noted above, the UE may not be required to listen for scheduling on a deactivated cell (including PSCell). However, once the PSCell is activated, the UE may need to listen for scheduling and fulfill other requirements for an activated cell. The UE may also listen for DL scheduling according to the configured discontinuous reception (DRX) for the PSCell.

As illustrated in FIG. 1, the UE may listen during an on-duration if the UE is being scheduled from the network. If the UE is not scheduled during the on-duration, the UE may enter sleep mode, and, thus, the UE may stop listening for further DL scheduling until the next on-duration. However, if the UE is scheduled during the on-duration, the UE may start an inactivity timer (which may be restarted each time the UE is scheduled). While the inactivity timer is running, the UE may continue to listen for scheduling. Once the inactivity timer expires, the UE may stop monitoring for further scheduling until the next on-duration, and enter power saving mode (i.e., sleep) where the UE is not monitoring for further scheduling.

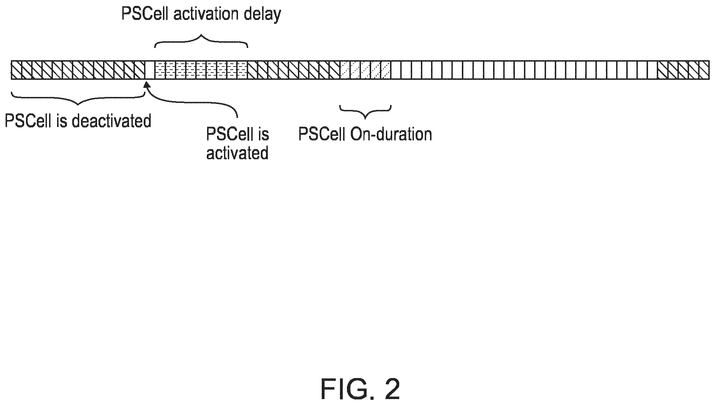

FIG. 2 illustrates an example of a DL scheduling operation. In some cases, there may be uncertainty regarding UE behavior and requirements related to when a UE should be available for scheduling on a newly activated PSCell. Such uncertainty, if unresolved, may lead to system inefficiency and delay in PSCell activation and active usage. It is currently unclear as to the UE behavior regarding listening for DL scheduling immediately after the PSCell has been requested to be activated, and the UE activation delay. Thus, under these circumstances, the network may not know when it is possible to schedule the UE in the activated PSCell except the UE may listen for scheduling at least at the first on-duration occasion, as illustrated in FIG. 2. As such, the UE behavior during the section between the PSCell delay period and the PSCell on-duration in FIG. 2 is unknown, which may lead to network uncertainty and system inefficiency.

SCell activation has been defined in 3GPP. However, the SCell DRX and when the SCell should be monitored for scheduling follows the DRX of the PCell (or PSCell). Thus, the PCell may be aware of when the SCell can be scheduled, and when the SCell is being activated. When the SCell is activated by a SCell act/de-act command medium access control (MAC) control element (CE), the inactivity timer may be started and, thus, no similar issue exists.

In view of the drawbacks described above, certain example embodiments may provide the ability for the UE to be requested to initiate listening for DL scheduling immediately after the UE has finalized activation of the deactivated PSCell. According to certain example embodiments, once the UE has finalized activation of the deactivated PSCell, the UE may be ready to receive the PDCCH and possible scheduling on the PSCell. This may be performed in various ways. For instance, in certain example embodiments, the action of the UE to initiate listening for DL scheduling immediately after the UE has finalized activation of the deactivated PSCell may be specified as a UE requirement. The UE requirement may be that the UE starts listening for DL scheduling in a newly activated PSCell after PSCell has been activated. In some example embodiments, this type of action may be performed based on a condition of the TAT. For example, this type of action may be performed when the TAT has not yet expired (since RA or SR may be triggered in this case). Additionally, in other example embodiments, the UE requirement to listen for DL may last as long as a scheduling command from the PSCell/SCG has been received.

According to certain example embodiments, the UE listening for DL scheduling may also be initiated by the network. For instance, the network may indicate to the UE in connection with the activation of the PSCell that the UE should or should not start listening for DL scheduling in a newly activated PSCell after the PSCell has been activated. In this case, the UE may start a DRX inactivity timer upon activation command, or not or after the time needed to complete PSCell activation has passed. Alternatively, in other example embodiments, a new timer may be introduced and configured in the activation command, and started upon receiving the activation command that requires the UE to monitor DL until the new timer expires. In certain example embodiments, the new timer may correspond to a new DRX inactivity timer, or it may correspond to a PSCell inactivity timer. Further, in some example embodiments, when the network (NW) indicates for the UE not to start the DL monitoring, the UE may monitor DL based on the configured DRX configuration. In certain example embodiments, such DRX configuration may be configured by the NW.

According to other example embodiments, it may be specified (e.g., controlled by the NW or directly specified in the specification) that the UE always starts listening for DL scheduling in a newly activated PSCell after the PSCell has been activated. The listening may be performed until a first occurrence of the on-duration, as defined for the PSCell based on the DRX configuration. In some example embodiments, this type of behavior by the UE may be based on a state of the TAT. For instance, this behavior may be performed based on the condition that the TAT has not yet expired (since RA may be triggered in this case). According to certain example embodiments, the DL listening/monitoring described above may mean, for instance, PDCCH decoding by the UE.

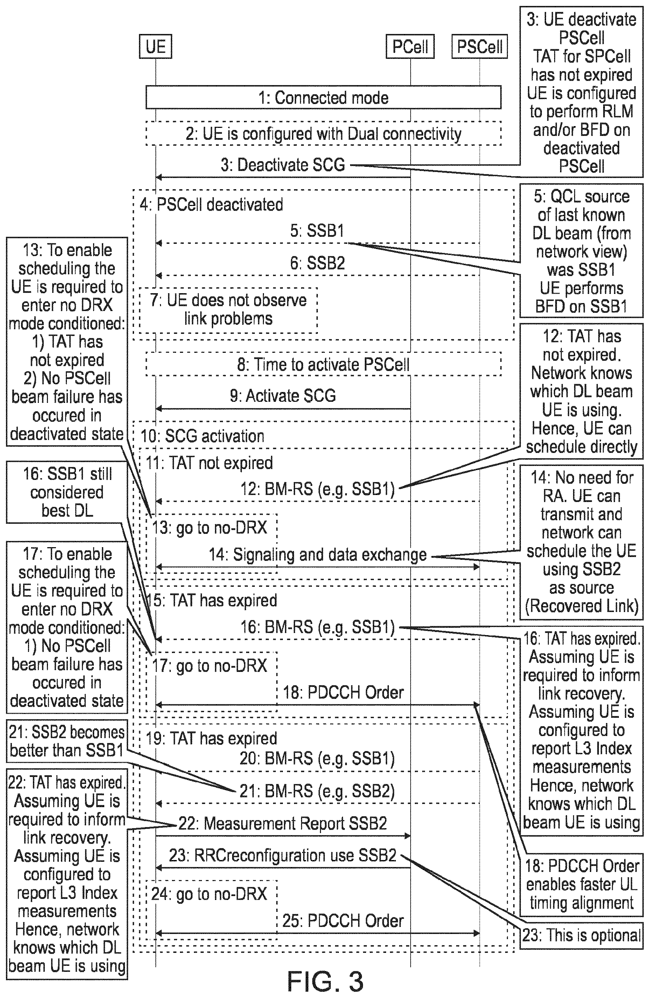

FIG. 3 illustrates an example signal flow of a DL scheduling operation, according to certain example embodiments. At 1, the UE may be in connected mode, and at 2, the UE may be configured with dual connectivity. Thus, according to certain example embodiments, the UE may have a PCell and a PSCell configured. At 3, the network may decide to deactivate the PSCell and send a deactivation command to the UE. At this point, assuming that the PSCell is operating in frequency range 2 (FR2), however not being limited to FR2, the UE and the network may be aligned on which DL beam the network uses for scheduling the UE. Further, at 3, TAT for the PSCell has not expired, and the UE may be configured to perform RLM and/or BFD on the deactivated PSCell.

In box 4 of FIG. 3, the UE may enter and may be in a deactivated state. According to certain example embodiments, while the UE is in the deactivated state, the UE may perform L3 measurements, and RLM and BFD if configured to do so. At 5 and 6, the UE may receive downlink reference signal (DL RS) transmissions from the network via synchronization signal block 1 (SSB1) and SSB2, respectively. At 5, since the quasi-colocation (QCL) source of the last known DL beam used for scheduling (from the network view) was SSB1 (or quasi collocated to SSB1), the UE may perform BFD on SSB1. At 7, while the PSCell is in the deactivated state, the UE may not observe any radio link related problems (does not detect radio link failure (RLF) of beam failure (BF)).

At 8, the network may decide to activate the PSCell. However, in other example embodiments, activation of the PSCell may be initiated by the UE. At 9, the network may request the UE to activate the PSCell. Further, at 10, the SCG activation may be performed based on various scenarios depending on the immediate conditions when the PSCell is activated. For instance, at 11, the TAT has not yet expired. Thus, at 12, the network may know which DL beam the UE is using (e.g., may be using for PDCCH reception), and the network can schedule the UE directly/immediately after the PSCell has been activated. According to certain example embodiments, if required to do so, at 13, the UE may directly enter no-DRX (i.e., the UE does not enter DRX mode), and, thus, immediately start listening for DL scheduling in the PSCell after the activation delay or even before, for example, at PSCell receiving the activation command. For instance, according to certain example embodiments, to enable scheduling, the UE may enter no-DRX mode. Additionally, certain conditions may be applied for scheduling to be enabled, including, for example, that TAT has not expired, and no PSCell beam failure has occurred in the deactivated state. In certain example embodiments, the UE may start listening to DL scheduling even prior to fully finalizing the PSCell activation. As such, the network could schedule the UE, and the UE may start listening to DL even prior to termination of the activation delay. According to such example embodiments, the network may be aware that the UE is listening and, thus, can be scheduled. Furthermore, the UE may be listening for scheduling in DL, which may mean that there will be no uncertainty about the UE behavior. In addition, the network may schedule the UE immediately, and the UE may transmit immediately without waiting until the first on-duration.

At 14, signaling and data exchange may be performed between the UE and the network. Further, in certain example embodiments, there may be no need for RA, and the UE may transmit, and the network may schedule the UE using SSB2 as the source (recovered link).

According to certain example embodiments, the SCG activation may be performed based on when TAT has expired, as seen at 15 in FIG. 3. According to some example embodiments, although the TAT has expired, the network may still know that it can schedule after the activation delay since the UE has been requested to listen to DL scheduling at least after the PSCell activation delay (or even earlier). According to certain example embodiments, the request to listen to DL in the newly activated PSCell may either be configured prior to the activation, specified directly in the specification (as UE requirement), or requested in/together with the activation command. Thus, according to certain example embodiments, there may be no uncertain period or need to wait for the first on-duration after PSCell activation. In other example embodiments, if needed, the network may schedule the UE with a PDCCH order to initiate preamble transmission, and possibly further data exchange.

At 16, the TAT has expired, and it may be assumed that the UE needs to inform link recovery. It may also be assumed that the UE is configured to report L3 index measurements so that the network may know which DL beam the UE is using. Further, in certain example embodiments, at 16, SSB1 may be considered as the preferred DL. At 17, the UE may go to no-DRX mode. Specifically, to enable scheduling, the UE may need to enter no-DRX mode based on the condition that no PSCell beam failure has occurred in the deactivated state. At 18, as noted above, the network may schedule the UE with a PDCCH order to initiate preamble transmission and possibly further data exchange. In doing so, the PDCCH order may enable faster UL timing alignment between the UE and the network.

According to certain example embodiments, the SCG activation may be performed based on when TAT has expired, as seen at 19 in FIG. 3. However, in other example embodiments, this may also be applicable in the case when TAT has not expired. At 20 and 21, the network may transmit beam management radio resources (BM-RS) to the UE, where at 21, SSB2 may be determined to be better than SSB1.

According to some example embodiments, in the case of when the TAT has expired, a similar procedure may be performed as that described above with respect to operation 15. However, in this example embodiment, as illustrated at operation 22, the UE and the network may use the DL beam based on the latest reported L3 measurement report, assuming this report includes the beam index. According to certain example embodiments, implicit alignment may be sufficient, and there may be no need for further signaling. In other example embodiments, the network may indicate to the UE which DL beam to use (e.g., a DL beam quasi collocated with SSB2). According to other example embodiments, the UE may enter/apply no-DRX (operation 24) in a period of time after the PSCell has been activated (e.g., until the first occasion of on-duration on the PSCell). Thus, the network may be able to reach the UE in a fast and efficient manner for any necessary scheduling. At 23, the network may optionally send, for example, a RRC reconfiguration to the UE to use SSB2. Further, at 25, the network may schedule the UE with a PDCCH order to initiate preamble transmission and possibly further data exchange.

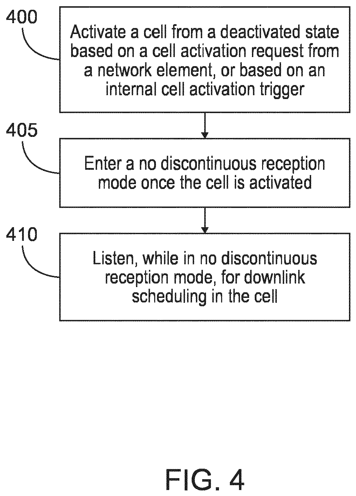

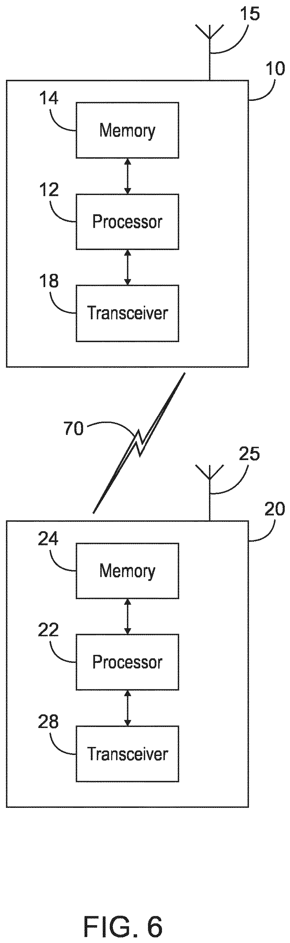

FIG. 4 illustrates an example flow diagram of a method, according to the claimed invention In an example embodiment, the method of FIG. 4 may be performed by a network entity, or a group of multiple network elements in a 3GPP system, such as LTE or 5G-NR. For instance, in an example embodiment, the method of FIG. 4 may be performed by a UE or device similar to one of apparatuses 10 or 20 illustrated in FIG. 6.

According to the claimed invention, at 400, activating a cell from a deactivated state based on a cell activation request from a network element. According to certain example embodiments, the cell may be configured with a discontinuous reception configuration. The method includes at 405, entering, regardless of the discontinuous reception configuration, a no discontinuous reception mode in the activated cell. The method further includes, at 410, listening, while in no discontinuous reception mode, for downlink scheduling in the cell for a period of time.

According to other example embodiments, the no discontinuous reception mode may correspond to monitoring a physical downlink control channel or a downlink communication. According to further example embodiments, activation of the cell may include an activation delay period, and the period of time may be a time until a first on-duration of the cell, or a new timer period. According to some example embodiments, when the period of time has not expired, the listening for downlink scheduling may be performed after the activation delay period. In certain example embodiments, when the period of time has not expired, the listening for downlink scheduling may be performed prior to the activation delay period ending. In some example embodiments, when the period of time has expired or is still running, the method may further include transmitting a measurement report of index measurements to the network element, and communicating with the network element on a downlink beam based on the measurement report. In other example embodiments, the listening for downlink scheduling may be performed after the activation delay period. In certain example embodiments, the listening for downlink scheduling may be performed based on instructions received from the network element.

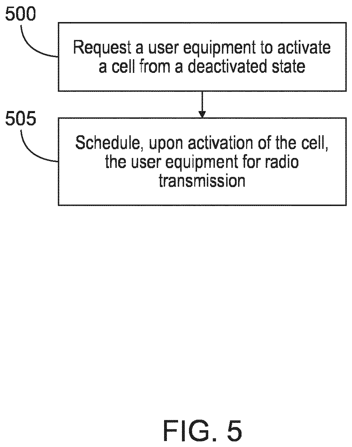

FIG. 5 illustrates a flow diagram of another method, according to the claimed invention. In an example embodiment, the method of FIG. 5 may be performed by a network entity, or a group of multiple network elements in a 3GPP system, such as LTE or 5G-NR. For instance, in an example embodiment, the method of FIG. 5 may be performed by a network or gNB similar to one of apparatuses 10 or 20 illustrated in FIG. 6.

According to the claimed invention, the method of FIG. 5 includes, at 500, requesting a user equipment to activate a cell from a deactivated state. According to certain example embodiments, the cell may be configured with a discontinuous reception configuration. The method further includes, at 505, scheduling, upon activation of the cell, the user equipment for radio transmission for a period of time.

According to some example embodiments, activation of the cell may include an activation delay period, and the period of time may be a time until a first on-duration of the network element, or a new timer period. According to other example embodiments, when the period of time has expired, the method may further include receiving a request from the user equipment to listen to downlink scheduling after the activation delay period. In certain example embodiments, when the period of time has expired, the method may also include scheduling the user equipment with a physical downlink control channel order to initiate preamble transmission. In some example embodiments, when the period of time has expired, the method may further include receiving a measurement report from the user equipment of index measurements, and communicating with the user equipment on a downlink beam based on the measurement report. In other example embodiments, the method may also include indicating to the user equipment which downlink beam to use.

FIG. 6 illustrates a set of apparatus 10 and 20 according to certain example embodiments. In certain example embodiments, the apparatus 10 may be a node or element in a communications network or associated with such a network, such as a UE, mobile equipment (ME), mobile station, mobile device, stationary device, IoT device, or other device. It should be noted that one of ordinary skill in the art would understand that apparatus 10 may include components or features not shown in FIG. 6.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 6.

As illustrated in the example of FIG. 6, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 6, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-4.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-4.

In some example embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to activate a cell from a deactivated state based on a cell activation request from a network element. According to certain example embodiments, the cell may be configured with a discontinuous reception configuration Apparatus 10 may also be controlled by memory 14 and processor 12 to enter, regardless of the discontinuous reception configuration, a no discontinuous reception mode in the activated cell. Apparatus 10 may further be controlled by memory 14 and processor 12 to listen, while in no discontinuous reception mode, for downlink scheduling in the cell for a period of time.

As illustrated in the example of FIG. 6, apparatus 20 may be a network, core network element, or element in a communications network or associated with such a network, such as gNB. It should be noted that one of ordinary skill in the art would understand that apparatus 20 may include components or features not shown in FIG. 6.

As illustrated in the example of FIG. 6, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 6, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1-3 and 5.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1-3 and 5.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to request a user equipment to activate a cell from a deactivated state. According to certain example embodiments, the cell may be configured with a discontinuous reception configuration. Apparatus 20 may also be controlled by memory 24 and processor 22 to schedule, upon activation of the cell, the user equipment for radio transmission for a period fo timet.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for activating a cell from a deactivated state based on a cell activation request from a network element. According to certain example embodiments, the cell may be configured with a discontinuous reception configuration. The apparatus may also include means for entering, regardless of the discontinuous reception configuration, a no discontinuous reception mode in the activated cell. The apparatus may further include means for listening, while in no discontinuous reception mode, for downlink scheduling in the cell for a period of time.

Certain example embodiments may also be directed to an apparatus that includes means for requesting a user equipment to activate a cell from a deactivated state. According to certain example embodiments, the cell may be configured with a discontinuous reception configuration. The apparatus may also include means for scheduling, upon activation of the cell, the user equipment for radio transmission.

Certain example embodiments described herein provide several technical improvements, enhancements, and /or advantages. In some example embodiments, it may be possible to enable faster and earlier possibility for the network to schedule the UE, and therefore increase the overall system performance and efficiency. It may also be possible for the network to schedule the UE during the time period between the PSCell activation delay (or even earlier) and the PSCell on-duration, and the UE may be able to listen for scheduling during that period (i.e., immediately after the activation of the PSCell disregarding the DRX configuration of the PSCell). According to other example embodiments, it may be possible for the network to know that the UE is listening, and therefore can be scheduled. As such, there would be no uncertainty to the network as to the UE behavior, and the network may be able to schedule the UE immediately. Furthermore, the UE may be able to transmit immediately without waiting until the first on-duration. According to other example embodiments, it may be possible to reduce the activation delay of the PSCell and, thus, this may enable faster use of the resources in the PSCell, which may increase system efficiency in terms of using the radio resources earlier than without applying certain procedures described herein. Other example embodiments may also help improve the use of the UE power, and enable faster increase of data TP or offloading.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- BFD: Beam Failure Detection
- BF: Beam Failure
- BM: Beam Management
- BS: Base Station
- DL: Downlink
- DRX: Discontinuous Reception
- eNB: Enhanced Node B
- E-UTRAN: Evolved UTRAN
- gNB: 5G or Next Generation NodeB
- LTE: Long Term Evolution
- MCG: Master Cell Group
- NR: New Radio
- PSCell: Primary Secondary Cell
- PCell: Primary Cell
- RLF: Radio Link Failure
- RLM: Radio Link Monitoring
- RS: Reference Symbol
- SCell: Secondary Cell
- SCG: Secondary Cell Group
- TAT: Timing Advance Timer
- UE: User Equipment
- UL: Uplink

## Claims

1. activating (400) a cell from a deactivated state based on a cell activation request from a network element, the cell being a primary secondary cel the method is **characterised by**
entering (405), regardless of a discontinuous reception configuration, a no discontinuous reception mode in the cell; and
listening (410), while in the no discontinuous reception mode, for downlink scheduling in the cell for a period of time.

2. The method according to claim 1, wherein the period of time is a time until a first on-duration of the cell or a time until a scheduling command is received from the network element.

3. The method according to claims 1 or 2, wherein activation (400) of the cell comprises an activation delay period.

4. The method according to claim 1, wherein when a timing advance timer has not expired, the listening for downlink scheduling is performed prior to the activation delay period ending.

5. The method according to any of claims 1-4, wherein the listening (410) for downlink scheduling is performed based on instructions received from the network element.

6. An apparatus (10), comprising:
means (18, 15) for activating (400) a cell from a deactivated state based on a cell activation request from a network element, the cell being a primary secondary cel , the apparatus is **characterised by**
means (12) for entering (405), regardless of a discontinuous reception configuration, a no discontinuous reception mode in the cell; and
means (12, 18, 15) for listening (410), while in no discontinuous reception mode, for downlink scheduling in the cell for a period of time.

7. The apparatus (10) according to claim 6, wherein the listening (410) for downlink scheduling while in the no discontinuous reception mode comprises monitoring a physical downlink control channel or a downlink communication.

8. The apparatus (10) according to claims 6 or 7, wherein the period of time is a time until a first on-duration of the cell or a time until a scheduling command is received from the network element.

9. The apparatus (10) according to any of claims 6-8, wherein activation (400) of the cell comprises an activation delay period.

10. The apparatus (10) according to claim 9, wherein when a timing advance timer has not expired, the apparatus (10) is configured to perform listening (410) for downlink scheduling before or after the activation delay period.

11. The apparatus (10) according to claim 9, wherein when a timing advance timer has not expired, the apparatus (10) is configured to perform the listening (410) for downlink scheduling prior to the activation delay period ending.

12. The apparatus (10) according to claim 9, wherein when a timing advance timer has expired, the listening (410) for downlink scheduling is performed after the activation delay period.

13. The apparatus (10) according to claim 9, wherein the apparatus (10) is configured to, when a timing advance timer has expired:
transmit a measurement report to the network element; and
communicate with the network element on a downlink beam based on the measurement report,
wherein the apparatus (10) is configured to perform the listening for the downlink scheduling after the activation delay period.

14. The apparatus (10) according to any of claims 6-9, wherein apparatus (10) is configured to perform the listening for downlink scheduling based on instructions received from the network element.

15. An apparatus (20), comprising:
means (28, 25) for requesting (500) a user equipment (10) to activate a cell from a deactivated state, the cell being a primary secondary cell; and
means (22) for scheduling (505), upon activation of the cell and regardless of a discontinuous reception configuration, the user equipment (10) for data transmission for a period of time.

## Patentansprüche

1. Verfahren, das Folgendes umfasst:
Aktivieren (400) einer Zelle aus einem deaktivierten Zustand auf Basis einer Zellaktivierungsanforderung von einem Netzwerkelement, wobei die Zelle eine primäre Sekundärzelle ist, wobei das Verfahren **gekennzeichnet ist durch**
Eintreten (405) in einen nicht diskontinuierlichen Empfangsmodus in der Zelle unabhängig von einer diskontinuierlichen Empfangsauslegung; und
Horchen (410) auf eine Downlinkplanung in der Zelle für eine Zeitperiode im nicht diskontinuierlichen Empfangsmodus.

2. Verfahren nach Anspruch 1, wobei die Zeitperiode eine Zeit bis zu einer ersten Einschaltdauer der Zelle oder eine Zeit ist, bis ein Planungsbefehl vom Netzwerkelement empfangen wird.

3. Verfahren nach Anspruch 1 oder 2, wobei eine Aktivierung (400) der Zelle eine Aktivierungsverzögerungsperiode umfasst.

4. Verfahren nach Anspruch 1, wobei, wenn ein Zeitvorlauftimer noch nicht abgelaufen ist, das Horchen auf eine Downlinkplanung durchgeführt wird, bevor die Aktivierungsverzögerungsperiode beendet ist.

5. Verfahren nach einem der Ansprüche 1 bis 4, wobei das Horchen (410) auf eine Downlinkplanung auf Basis von Anweisungen durchgeführt wird, die vom Netzwerkelement empfangen werden.

6. Vorrichtung (10), die Folgendes umfasst:
Mittel (18, 15) zum Aktivieren (400) einer Zelle aus einem deaktivierten Zustand auf Basis einer Zellaktivierungsanforderung von einem Netzwerkelement, wobei die Zelle eine primäre Sekundärzelle ist, wobei die Vorrichtung **gekennzeichnet ist durch**
Mittel (12) zum Eintreten (405) in einen nicht diskontinuierlichen Empfangsmodus in der Zelle unabhängig von einer diskontinuierlichen Empfangsauslegung; und
Mittel (12, 18, 15) zum Horchen (410) auf eine Downlinkplanung in der Zelle für eine Zeitperiode im nicht diskontinuierlichen Empfangsmodus.

7. Vorrichtung (10) nach Anspruch 6, wobei das Horchen (410) auf eine Downlinkplanung im nicht diskontinuierlichen Empfangsmodus das Überwachen eines physischen Downlinksteuerkanals oder einer Downlinkkommunikation umfasst.

8. Vorrichtung (10) nach Anspruch 6 oder 7, wobei die Zeitperiode eine Zeit bis zu einer ersten Einschaltdauer der Zelle oder eine Zeit ist, bis ein Planungsbefehl vom Netzwerkelement empfangen wird.

9. Vorrichtung (10) nach einem der Ansprüche 6 bis 8, wobei eine Aktivierung (400) der Zelle eine Aktivierungsverzögerungsperiode umfasst.

10. Vorrichtung (10) nach Anspruch 9, wobei, wenn ein Zeitvorlauftimer noch nicht abgelaufen ist, die Vorrichtung (10) dazu ausgelegt ist, vor oder nach der Aktivierungsverzögerungsperiode ein Horchen (410) auf eine Downlinkplanung durchzuführen.

11. Vorrichtung (10) nach Anspruch 9, wobei, wenn ein Zeitvorlauftimer noch nicht abgelaufen ist, die Vorrichtung (10) dazu ausgelegt ist, das Horchen (410) auf eine Downlinkplanung durchzuführen, bevor die Aktivierungsverzögerungsperiode beendet ist.

12. Vorrichtung (10) nach Anspruch 9, wobei, wenn ein Zeitvorlauftimer abgelaufen ist, das Horchen (410) auf eine Downlinkplanung nach der Aktivierungsverzögerungsperiode durchgeführt wird.

13. Vorrichtung (10) nach Anspruch 9, wobei die Vorrichtung (10), wenn ein Zeitvorlauftimer abgelaufen ist, zu Folgendem ausgelegt ist:
Übertragen eines Messberichts zum Netzwerkelement; und
Kommunizieren mit den Netzwerkelement auf einem Downlinkstrahl auf Basis des Messberichts,
wobei die Vorrichtung (10) dazu ausgelegt ist, das Horchen auf die Downlinkplanung nach der Aktivierungsverzögerungsperiode durchzuführen.

14. Vorrichtung (10) nach einem der Ansprüche 6 bis 9, wobei die Vorrichtung (10) dazu ausgelegt ist, das Horchen auf eine Downlinkplanung auf Basis von Anweisungen durchzuführen, die vom Netzwerkelement empfangen werden.

15. Vorrichtung (20), die Folgendes umfasst:
Mittel (28, 25) zum Anfordern (500) bei einer Teilnehmereinrichtung (10), eine Zelle aus einem deaktivierten Zustand zu aktivieren, wobei die Zelle eine primäre Sekundärzelle ist; und
Mittel (22) zum Planen (505) der Teilnehmereinrichtung (10) für eine Datenübertragung für eine Zeitperiode bei Aktivierung der Zelle und unabhängig von einer diskontinuierlichen Empfangsauslegung.

## Revendications

1. Procédé, comprenant :
l'activation (400) d'une cellule depuis un état désactivé sur la base d'une demande d'activation de cellule provenant d'un élément de réseau, la cellule étant une cellule secondaire primaire, le procédé est **caractérisé par**
l'entrée (405), indépendamment d'une configuration de réception discontinue, d'un mode de réception non discontinue dans la cellule ; et
l'écoute (410), en mode de réception non discontinue, d'une planification de liaison descendante dans la cellule pendant une période de temps.

2. Procédé selon la revendication 1, dans lequel la période de temps est un temps jusqu'à un première durée de marche de la cellule, ou un temps jusqu'à ce qu'un ordre de planification soit reçu de l'élément de réseau.

3. Procédé selon les revendications 1 ou 2, dans lequel l'activation (400) de la cellule comprend un délai d'activation.

4. Procédé selon la revendication 1, dans lequel lorsqu'un temporisateur d'avance temporelle n'a pas expiré, l'écoute d'une planification de liaison descendante est effectuée avant la fin du délai d'activation.

5. Procédé selon l'une des revendications 1 à 4, dans lequel l'écoute (410) d'une planification de liaison descendante est effectuée sur la base d'instructions reçues de l'élément de réseau.

6. Appareil (10), comprenant :
des moyens (18, 15) pour activer (400) une cellule depuis un état désactivé sur la base d'une demande d'activation de cellule provenant d'un élément de réseau, la cellule étant une cellule secondaire primaire, l'appareil est **caractérisé par**,
des moyens (12) pour entrer (405), indépendamment d'une configuration de réception discontinue, un mode de réception non discontinue dans la cellule ; et
des moyens (12, 18, 15) pour écouter (410), en mode de réception non discontinue, une planification de liaison descendante dans la cellule pendant une période de temps.

7. Appareil (10) selon la revendication 6, dans lequel l'écoute (410) de la planification de liaison descendante en mode de réception non discontinue comprend la surveillance d'un canal physique de contrôle de liaison descendante ou d'une communication de liaison descendante.

8. Appareil (10) selon les revendications 6 ou 7, dans lequel la période de temps est un temps jusqu'à un première durée de marche de la cellule, ou un temps jusqu'à ce qu'un ordre de planification soit reçu de l'élément de réseau.

9. Appareil (10) selon l'une des revendications 6 à 8, dans lequel l'activation (400) de la cellule comprend un délai d'activation.

10. Appareil (10) selon la revendication 9, dans lequel lorsqu'un temporisateur d'avance temporelle n'a pas expiré, l'appareil (10) est configuré pour effectuer l'écoute (410) d'une planification de liaison descendante avant ou après le délai d'activation.

11. Appareil (10) selon la revendication 9, dans lequel lorsqu'un temporisateur d'avance temporelle n'a pas expiré, l'appareil (10) est configuré pour effectuer l'écoute (410) de la planification de liaison descendante avant la fin du délai d'activation.

12. Appareil (10) selon la revendication 9, dans lequel lorsqu'un temporisateur d'avance temporelle a expiré, l'écoute (410) de la planification de liaison descendante est effectuée après le délai d'activation.

13. Appareil (10) selon la revendication 9, dans lequel l'appareil (10) est configuré pour, lorsqu'un temporisateur d'avance temporelle a expiré :
transmettre un rapport de mesure à l'élément de réseau ; et
communiquer avec l'élément de réseau sur un faisceau de liaison descendante sur la base du rapport de mesure,
dans lequel l'appareil (10) est configuré pour effectuer l'écoute de la planification de liaison descendante après le délai d'activation.

14. Appareil (10) selon l'une des revendications 6 à 9, dans lequel l'appareil (10) est configuré pour effectuer l'écoute d'une planification de liaison descendante sur la base d'instructions reçues de l'élément de réseau.

15. Appareil (20), comprenant :
des moyens (28, 25) pour demander (500) à un équipement utilisateur (10) d'activer une cellule depuis un état désactivé, la cellule étant une cellule secondaire primaire ; et
des moyens (22) pour planifier (505), à l'activation de la cellule et indépendamment d'une configuration de réception discontinue, une transmission de données par l'équipement utilisateur (10) pendant une période de temps.
